# EUROPEAN PATENT APPLICATION

(11) **EP 3 854 560 A1**
(43) Date of publication of application: **28.07.2021**
(21) Application number: 20153875.8
(22) Date of filing: 27.01.2020
(51) Int. Cl.: B29C 33/42, B29D 99/00, F03D 1/06

(54) **METHOD FOR FABRICATING A WIND TURBINE SHELL, WIND TURBINE BLADE, WIND TURBINE AND METHOD FOR REPAIR OF A WIND TURBINE BLADE SHELL**

(71) Applicant: Siemens Gamesa Renewable Energy A/S, 7330 Brande (DK)
(72) Inventor: Bernhammer, Lars Oliver, 9400 Nørresundby (DK); Girschig, Florian, 9000 Aalborg (DK); Joergensen, Jens Grandjean, 9000 Aalborg (DK); Nielsen, Mogens, 9220 Aalborg (DK); Pawar, Ashish, 9000 Aalborg (DK)
(74) Representative: Aspacher, Karl-Georg

(57) **Abstract**

Method for fabricating a wind turbine blade shell, wherein the wind turbine blade shell is fabricated in a casting process using a mould (1) and a plurality of shell components (6), comprising the steps:
- providing the mould (1) and the plurality of shell components (6),
- providing at least one alignment mark (3) at the mould (1) and/or at one or more shell components (6) placed in the mould,
- providing at least one marking means at the position of the at least one alignment mark (3),
- arranging the or further shell components in the mould and casting the wind turbine blade shell.

## Description

The invention relates to a method for fabricating a wind turbine blade shell, wherein the wind turbine blade shell is fabricated in a casting process using a mould and a plurality of shell components. Furthermore, the invention relates to a wind turbine blade, a wind turbine and a method for repair of a wind turbine blade shell.

After fabrication of a wind turbine blade shell or a wind turbine blade comprising a wind turbine blade shell, respectively, additional components of the wind turbine blade may be added to the surface of the wind turbine blade shell. Such components can be for instance vortex generators for improving an aerodynamic behaviour of a wind turbine blade. It is known to install these vortex generators in a final assembly step of the wind turbine blade production. In this step, reference points are measured to align the vortex generators using templates or measurement tape. These points are connected to form a reference line. The accurate positioning of this reference line is of critical importance to guarantee the aerodynamic performance of the blade that depends on a precise positioning of each of the vortex generators.

A manual measurement of the reference points on the outer surface of a painted wind turbine blade is cumbersome and subject to large uncertainties. To obtain the desired aerodynamic properties, a positioning of the vortex generators has to comply the tight tolerances of for instances one percent or less. The precise positioning of vortex generators or other elements on the surface of the wind turbine blade may be especially complicated in a root region of the blade, where the wind turbine blade has a circular cross section for connecting the wind turbine blade to a hub of a wind turbine. Due to the circular cross-sectional shape, no clearly distinguishable starting points to take the measurements for positioning of the vortex generators exist. Furthermore, a wind turbine blade can deform due to its own weight resulting in a bending of the blade so that the measurement process becomes even more cumbersome.

In US 9 777 703 B2, a method of retrofitting vortex generators on a wind turbine blade is disclosed. The method comprises identifying a separation line on a suction side of the wind turbine blade and mounting one or more vortex generator panels between the separation line and a leading edge of the wind turbine blade. The separation line is identified by feeding a suction side airflow with particles and determining a distribution of these particles in a deposit on the wind turbine blade after a certain time of operation.

It is therefore an object of the invention to facilitate a positioning of components on a wind turbine blade shell.

According to the invention, this problem is solved by a method as initially described, wherein the method comprises the steps:
- providing the mould and the plurality of shell components,
- providing at least one alignment mark at the mould and/or at one or more shell components placed in the mould,
- providing at least one marking means at the position of the at least one alignment mark,
- arranging the or further shell components in the mould and casting the wind turbine blade shell.

This method has the advantage that the at least one marking means can be introduced in the wind turbine blade shell already in its fabrication process, so that the occurrence of problems in defining a starting point for a measurement on an already fabricated blade, for instance caused by a bending of the wind turbine blade and/or resulting from a shape of the blade, can be circumvented. The at least one alignment mark can be provided for instance with reference to the mould, so that the position of the at least one alignment mark and consequently also the position of the at least one marking means, which is placed at a position of the at least one alignment mark, can be determined precisely already during the casting process of the wind turbine blade shell.

The fabrication of a wind turbine blade shell in a casting process using a mould and a plurality of shell components like glass fibre patches allows the introduction of one or more marking means to the mould and/or to a shell component during fabrication of the wind turbine blade shell. These marking means can be used afterwards for determining the position for mounting additional components like vortex generators to the wind turbine blade shell. A marking means provided at the mould can be used for instance to provide a mark on a wind turbine blade shell casted in the mould. It is also possible that a marking means provided at the mould and/or a marking means provided at a shell component placed in mould remains in the wind turbine blade shell after casting, so that the marking means itself serves as a mark for defining a position.

The at least one alignment mark can be provided at a position that is suitable for instance for the mounting of at least one vortex generator to the wind turbine blade shell or a wind turbine blade comprising the wind turbine blade shell, respectively. Due to the positioning of the marking means at the position of the at least one alignment mark, the position of the at least one alignment mark and therefore also the positions for mounting the at least one vortex generator can be redetermined after the fabrication of the wind turbine blade shell. This facilitates the mounting of the vortex generators, or other additional components, respectively, to the wind turbine blade shell since no additional measurements have to be conducted on the shell or on a wind turbine blade comprising the shell, respectively.

Since the wind turbine blade shell does not bend in the mould during its casting process, the precision of the positioning of the at least one marking means and therefore also the precision of the positioning of an additional component like a vortex generator can be improved. Also, manual measurements for determining the positions for mounting these additional components on an already casted wind turbine blade can be avoided advantageously.

In a preferred embodiment of the invention, the at least one alignment mark is provided using optical projection, especially laser projection. A projection of the at least one alignment mark onto the mould and/or on one or more shell components placed in the mould allows for a precise determination of the positions for the at least one marking means. Also, a projected alignment mark does not influence the casting process. Furthermore, the projected at least one alignment mark can be adapted easily to account for the individual aerodynamic properties of the wind turbine blade shell that is fabricated in the mould. A usage of templates or comparable means for determining the position for mounting the additional components can therefore be avoided.

The at least one alignment mark can be provided for instance by projection of one or more lines and/or symbols on the mould and/or on one or more shell components placed in the mould, respectively. For projection of the at least one alignment mark, one or more projectors can be used. By using optical projection like laser projection, a relation between a plurality of alignment marks and/or a relation between at least one alignment mark and the mould and therefore also a relation of the at least one alignment mark to the fabricated wind turbine blade shell can be aligned and adjusted precisely.

Preferably, a marking means providing a protrusion to the mould is placed on the at least one alignment mark at the mould. Due to the protrusion provided by the marking means placed at the mould, a mark like an imprint or an indentation is created on a surface of the wind turbine blade shell at the position of the marking means. The marking means can be placed on an inner surface of the mould that defines an outer shape of the wind turbine blade shell fabricated using the mould. The marking means can be fixated to the mould for instance by gluing. Since the wind turbine blade shell adapts to the shape of the mould or the shape of the inner surface of the mould, respectively, the protrusion provided by the marking means causes a mark on the casted wind turbine blade shell. These marks can be used afterwards to determine the positions for mounting additional components like vortex generators on the fabricated wind turbine blade shell or a wind turbine blade comprising the wind turbine blade shell, respectively.

Preferably, at least one tape and/or at least one plug, especially at least one rubber plug, is used as marking means. One or more tapes can be for instance adhered to the mould at the position of the at least one alignment mark to define a cross or a comparable geometrical shape that is transferred afterwards as an imprint to the surface of the wind turbine blade shell. The same effect can be achieved using a plug, especially a rubber plug, which can be fixated to the mould for instance by gluing, and which causes an indentation on the wind turbine blade shell.

In a preferred embodiment of the invention, at least one marking material different from the blade material or the blade materials of the at least one shell component and/or different form a resin used for moulding of the wind turbine blade shell is used as marking means. Thereby, a marking material that is provided on the mould and/or on a shell component placed in the mould can be used as marking means. The marking material can be placed in the mould and/or placed or fixated on a shell component that is placed in the mould. The marking material can then be included in the wind turbine blade shell during its fabrication process, for instance by embedding the marking material in the wind turbine blade shell. Since the material used as marking material is different from the blade material or the blade materials of the at least one shell component and/or from a resin used for moulding of the wind turbine blade shell, the marking material can be used for determining the position defined by the at least one alignment mark on the fabricated wind turbine blade shell.

Especially, the marking material exhibits at least one material property different from those of the material or materials and/or a resin used for fabricating the wind turbine blade shell. Due to this difference, the position of the marking material can be determined by evaluating the material property of a surface or a portion of a surface of the wind turbine blade shell.

A shell component placed in the mould can be a fibre patch, for instance a glass fibres mat or the like. Such fibre patches or fibre mats can be moulded for instance using a resin like epoxy. By choosing a marking material which is different from the used resin and/or from the material or materials of the shell components, the determination of the position of the marking means can be facilitated.

Preferably, a marking material with a heating property and/or a heat absorption property different from the blade material or the blade materials of the at least one shell component and/or different from a resin used for moulding of the wind turbine blade is used. This kind of marking material can be detected after the fabrication of the wind turbine blade shell due to its different heating properties and/or its different heat absorption characteristics by evaluating a heat distribution and/or a temperature distribution in the wind turbine blade shell, for instance made visible using a infrared camera.

Preferably, metal material and/or magnetic material and/or ceramic material, especially metallic and/or magnetic and/or ceramic particles or splinters, are used as marking material. It is possible that a marking means comprises one or more different marking materials that differ from the materials used for fabrication of the wind turbine blade shell like previously described. A marking material can be provided for instance in form of particles or splinters. Also the position of a marking means comprising a metallic material and/or a magnetic material as marking material can be determined in the fabricated wind turbine blade shell by evaluating the corresponding different material property. Apart from heating properties, also the magnetic and/or optical properties can be used for a determination of the position of the marking material.

In a preferred embodiment of the invention, an electronically and/or optically detectable structure, especially a RFID chip, is used as marking means. An electronically and/or optically detectable structure can be placed on the mould and/or on at least one shell component placed in the mould so that this structure is included or embedded in the wind turbine blade shell. The position of an electronically and/or optically detectable structure can be determined using corresponding electronical and/or optical procedures. Especially when using an electronically detectable structure, also structures that are placed on a shell component can be detected easily in the fabricated wind turbine blade shell or a wind turbine blade comprising the wind turbine blade shell, respectively. For instance, a RFID chip (Radio Frequency Identification Chip) and its position can be detected also if the RFID chip is located underneath a shell component like for instance a mat of fibres or the like. An embedded RFID chip can be detected for instance by using a handheld device like a smart phone. This is especially advantageous, if a technician needs to determine the position for instance during a repair procedure on a wind turbine blade installed on a wind turbine.

Preferably, a marked shell component, especially a fibre patch marked with a symbol, is used as marking means. The shell component can either be transparent or comprise a corresponding symbol on an opposite surface, so that the mark of the shell component can be positioned at the at least one alignment mark provided in the mould. By using a corresponding mark on an opposing side of the shell component, a positioning of the shell component on the alignment mark is also possible in the case that the shell component is not transparent. The mark can be for instance coloured and/or a symbol like a cross, a dot, or a circle. In the fabricated wind turbine blade shell, the mark of the shell component is positioned on an outer surface of the wind turbine blade shell so that it can be recognized easily for the mounting of additional components like vortex generators.

In a preferred embodiment of the invention, the at least one alignment mark is projected on a position determined for arrangement of a vortex generator and/or at least one vortex generator is mounted on the casted wind turbine blade at a position marked by the at least one marking means. The vortex generators can be mounted for instance on a wind turbine blade shell comprising a suction side of a wind turbine blade. In this case, the alignment marks and/or the marking means can be provided on a suction side mould of the wind turbine blade shell.

A wind turbine blade according to the invention comprises at least one wind turbine blade shell fabricated according to a method for fabrication of a wind turbine blade shell according to the invention or at least one wind turbine blade shell comprising at least one mark, wherein the at least one mark is an imprint and/or an indentation and/or an electronically and/or optically detectable structure, especially a RFID chip, and/or wherein the at least one mark is at least one marking material different from the shell material or the shell materials of the at least one shell component and/or different from a resin used for moulding of the wind turbine blade shell.

A wind turbine blade comprising one or more imprints and/or indentations or electronically and/or optically detectable structures and/or at least one marking material as marking means enables a precise positioning of additional components like for instance vortex generators to the wind turbine blade.

Preferably, the at least one marking material is a material with a heating property and/or a heat absorption property different from the shell material or the shell materials of the at least one shell component and/or different from a resin used for moulding of the wind turbine blade shell.

Preferably, the marking material is or comprises a metallic material and/or a magnetic material and/or a ceramic material, especially metallic and/or magnetic and/or ceramic particles or splinters.

The advantages and details described previously for the method for fabricating of a wind turbine blade shell apply correspondingly for a wind turbine blade according to the invention.

A wind turbine according to the invention comprises at least one wind turbine blade according to the invention.

Also for a wind turbine according to the invention, the details and advantages of a wind turbine blade according to the invention and/or of the method for fabricating a wind turbine blade shell apply correspondingly.

In a method for repair according to the invention of a wind turbine blade shell fabricated using a method for fabrication of a wind turbine blade shell according to the invention, of a wind turbine blade according to the invention or of a wind turbine according to the invention, a first surface portion of the wind turbine blade shell comprises at least one mark, wherein on a second surface portion of the wind turbine blade shell surrounding the first surface portion, a plurality of auxiliary marks describing the position of the at least one mark is provided prior to a repair of the first surface portion.

A repair of a wind turbine blade shell or a wind turbine blade or a wind turbine comprising a wind turbine blade shell, respectively, may involve an exchange or at least a surface treatment of the first surface portion of the wind turbine blade shell. Such a surface treatment can be for instance an exchange of the first surface portion and/or include steps of grinding and/or painting of the first surface portion, which can lead to a vanishing of a mark present in the first surface portion. By providing the plurality of auxiliary marks on the second surface portion, which surrounds the first surface portion, a redetermination of the position of the at least one mark in the first surface portion after the repair procedure is enabled.

The auxiliary marks in the second surface portion can be positioned in such manner that the position of the at least one mark in the first surface portion can be obtained after a repair of the first surface portion for instance by triangulation or other comparable geometric methods. This offers the advantage that also after a repair of the first surface portion, an additional component like a vortex generator can be positioned precisely on the first surface portion even when a mark previously present in the first surface portion has been damaged and/or removed during the repair procedure.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a flow diagram of a method for fabrication of a wind turbine blade shell according to the invention,
- Fig. 2: a mould for fabricating a wind turbine blade shell with alignment marks,
- Fig. 3: a detailed view of an inner surface of the mould,
- Fig. 4: a mould with a shell component place in the mould and a marking means provided on the shell component,
- Fig. 5: a mould with a marked shell component placed in the mould,
- Fig. 6: a wind turbine according to the invention comprising three wind turbine blades according to the invention, and
- Fig. 7: an illustration of an embodiment of a method for repair of a wind turbine according to the invention.

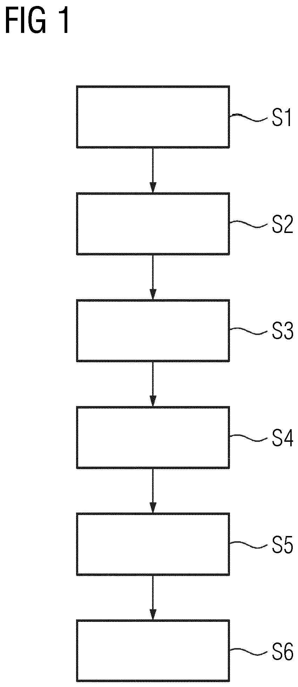

In fig. 1, a flow diagram of a method for fabricating a wind turbine blade shell is shown. The wind turbine blade shell is fabricated in a casting process using a mould and a plurality of shell components. The method comprises the steps as listed in the following table:

| | |
|---|---|
| S1 | start |
| S2 | providing the mould and the plurality of shell components |
| S3 | providing at least one alignment mark at the mould and/or at one or more shell components placed in the mould |
| S4 | providing at least one marking means at the position of the at least one alignment mark |
| S5 | arranging the further shell components in the mould in casting the wind turbine blade shell |
| S6 | end |

A wind turbine blade shell fabricated according to this method or a wind turbine blade comprising at least one wind turbine blade shell fabricated according to this method comprises at least one mark, which is created by a marking means during the fabrication process and/or which is provided by the marking means itself if the marking means is incorporated in the wind turbine blade shell during the fabrication. Different embodiments of marking means, of their provision to alignment marks as well as of the provision of the alignment marks at the mould and/or at one or more shell components are described hereafter.

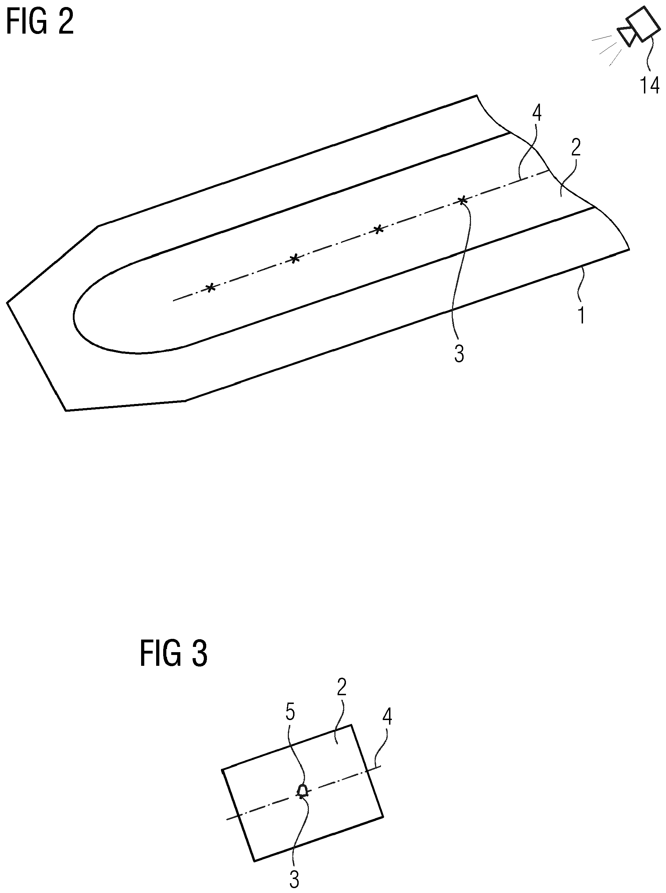

In fig. 2, a mould 1 for casting a wind turbine blade shell is shown. The mould 1 comprises an inner surface 2 that defines the shape of a wind turbine blade shell casted using the mould 1. At this inner surface 2 of the mould, a plurality of alignment marks 3 is provided using an optical projection like laser projection from one or more projectors 14. The projected image comprises a plurality of crosses, wherein each of the crosses represents an alignment mark 3, and a line 4 connecting the crosses. The projection of one or more alignment marks 3 is an embodiment of providing one or more alignment marks 3 according to step S3 in the initially described method.

The alignment marks 3 are projected on positions that are each determined for an arrangement of a vortex generator on the fabricated wind turbine blade shell. The alignment marks 3 also define the position for placing marking means, wherein the marking means are used to provide marks on the wind turbine blade shell. Due to these marks, the position for mounting the vortex generators on the fabricated wind turbine blade shell can be determined precisely, so that the mounting of the vortex generators is facilitated. Additionally or alternatively to the vortex generators, also other additional components can be mounted on the surface using marking means placed at the position of respective alignment marks 3 provided at the mould 1 and/or provided at a shell component placed in the mould 1, as it is described later.

Fig. 3 shows a detail of the inner surface 2 of the mould 1. On the alignment mark 3, a plug 5 has been arranged as a marking means. The plug 5 can be for instance a rubber plug and provides a protrusion to the inner surface 2 of the mould 1. The plug 5 can be glued on the inner surface 2 of the mould 1 at the position of the alignment mark 3, which is projected optically on the inner surface 2 of the mould 1. Since the outer shape of a wind turbine blade shell that is casted using the mould 1 adapts to the shape of the inner surface 2 of the mould 1, the plug 5 arranged on the inner surface 2 of the mould 1 will cause an indentation in the outer surface of the casted wind turbine blade shell. This indentation represents a mark that can be used to determine a position for mounting of an additional component like a vortex generator to the wind turbine blade shell or a wind turbine blade comprising the wind turbine blade shell, respectively. Apart from the plug 5, also one or more tapes can be arranged and/or adhered to the inner surface 2 of the mould 1 at the position of the alignment mark 3. Correspondingly to the plug 5, also the one or more tapes create an imprint as a mark in the wind turbine blade shell during its fabrication. The arrangement of one or more plugs 5 and/or of the one or more tapes of the alignment marks 3 is an embodiment of providing one or more marking means according to step S4 in the initially described method.

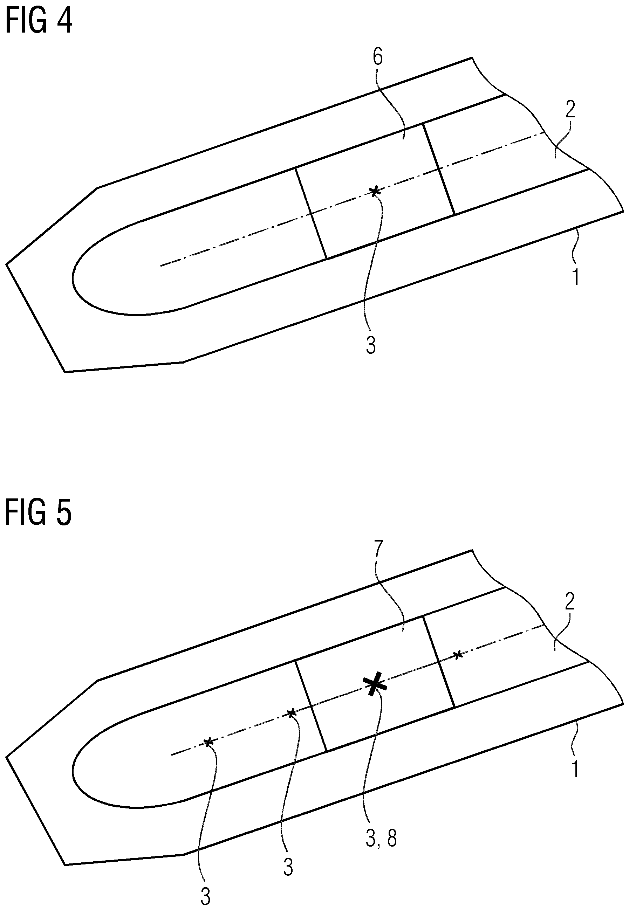

In fig. 4, a shell component 6 is placed in the mould 1. In this case, the alignment mark 3 is projected onto the shell component 6. The shell component 6 is for instance a fibre patch consisting of a plurality of glass fibres used in combination with a resin for casting the wind turbine blade shell. Also at the position of the alignment mark 3 projected on the shell component 6, a marking means can be provided to define a position for mounting of an additional component like a vortex generator.

Thereby, for instance a marking material which is different from the blade material or the blade materials of the at least one shell component and/or different from a resin used for moulding of the wind turbine blade shell can be used as marking means. The marking means can be for instance a marking material with a heating property and/or a heat absorption property different from the blade material or the blade materials of the at least one shell component 6 and/or different from the resin used for moulding of the wind turbine blade. In a wind turbine blade shell fabricated for instance from glass fibre mats and from a resin like epoxy, a metallic material and/or a magnetic material and/or a ceramic material can be used as marking material. The marking material can be provided for instance as particles or splinters, which are positioned and/or glued at the position of the alignment mark 3 to the shell component 6. After the casting of the wind turbine blade shell comprising the shell component 6, the marking material is embedded in the wind turbine blade shell.

It is also possible that an electronically and/or optically detectable structure, for instance a RFID ship, is used as marking means, wherein the structure is placed at the position of the alignment mark 3. It is also possible that the marking material and/or the optically and/or electronically detectible structure is placed on an alignment mark 3 provided at the inner surface 2 of the mould and that the marking means is embedded in an outer surface of the fabricated wind turbine blade shell. The arrangement of one or more marking materials and/or of one or more electronically and/or optically detectable structures on the alignment marks 3 is an embodiment of providing one or more marking means according to step S4 in the initially described method.

In fig. 5, a shell component 7 with a mark 8 is placed in the mould 1 in such manner that the mark 8 of the shell component 7 is at the same position as one of the alignment marks 3 projected onto the inner surface 2 of the mould 1. The mark 8 of the shell component 7 can be for instance a coloured symbol like a cross or the like. After casting of the wind turbine blade shell, the mark 8 is visible on the outer surface of the shell, which is during fabrication in direct contact with the inner surface 2 of the mould. If the shell component 7 is for instance transparent, the mark 8 on the outer surface can be seen through the shell component 7 enabling the positioning of the shell component 7 on the alignment mark 3. If the shell component 7 is not transparent, an additional mark can be placed on a surface of the shell component 7 opposite to the mark 8, so that the additional symbol can be seen on the backside of the shell component 7 for positioning of the shell component 7 on the alignment mark 3. A wind turbine blade comprising one or more shell components 7 with a mark 8 provides also one or more marks 8 on its outer surface, so that a position for mounting additional components like vortex generators can be easily determined. The arrangement of one or more marked shell components 7 on the alignment marks 3 is an embodiment of providing one or more marking means according to step S4 in the initially described method.

It is also possible that a combination of two or more different embodiments of marking means are used in the method for fabrication of a wind turbine blade shell. This enables the fabrication of a wind turbine blade shell, or a wind turbine blade comprising the wind turbine blade shell, respectively, which comprises one or more different types of marks 8.

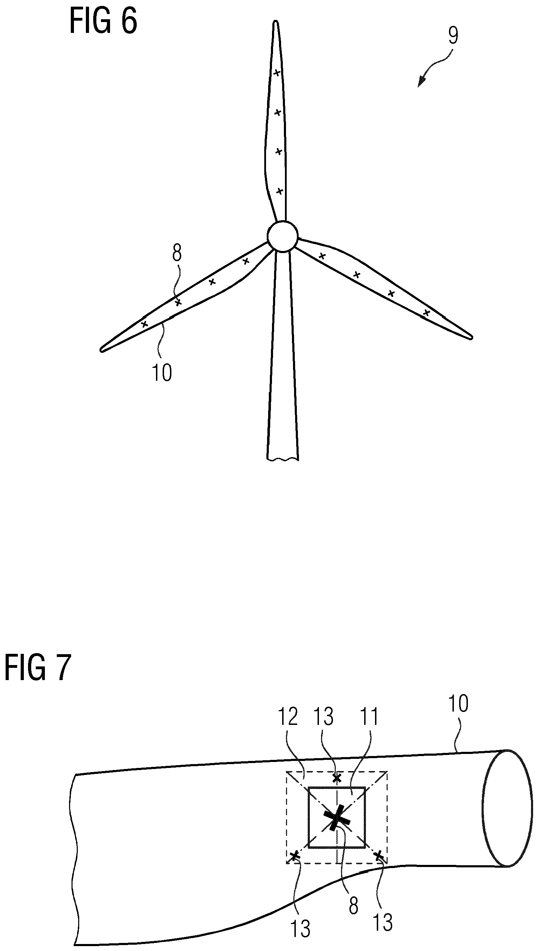

In fig. 6, a wind turbine 9 according to the invention is shown. The wind turbine 9 comprises three wind turbine blades 10 according to the invention, wherein the wind turbine blades 10 each comprise at least one wind turbine blade shell fabricated using a method for fabrication of a wind turbine blade according to the invention and/or each comprise a wind turbine blade shell with at least one mark 8.

The mark 8 can be an imprint and/or an indentation and/or an electronically and/or optically detectible structure like a RFID chip. It is also possible that the mark 8 is or comprises at least one marking material different from the shell material and/or the shell materials of the at least one shell component and/or different from a resin used for moulding of the wind turbine blade shell. It is also possible that a wind turbine blade 10 comprises one or more different marks 8.

In fig. 7, an embodiment of a method for repair of a wind turbine blade shell is shown. On a first surface portion 11 of the wind turbine blade 10, a mark 8 is located. The mark 8 can be for instance an imprint and/or indentation and/or a marking material or an electronically or optically detectable structure incorporated in the surface of the wind turbine blade 10.

The repair can involve a surface treatment of the first portion 11 of the wind turbine blade surface. The surface treatment can be for instance a grinding of the first surface portion 11, a painting of the first surface portion 11 and/or an exchange of the first surface portion 11. Due to the surface treatment, the mark 8 can be removed during the repair. To reconstruct the position of the mark 8 after the surface treatment and/or after the repair, on a second surface portion 12 surrounding the first surface portion 11, a plurality of auxiliary marks 13 is provided. The auxiliary marks 13 can be used to reconstruct the position of the mark 8 for instance by triangulation as depicted. Besides triangulation, also other geometrical methods for reproducing the position of the mark 8 using the auxiliary marks 13 can be used.

Although the present invention has been described in detail with reference to the preferred embodiment, the present invention is not limited by the disclosed examples from which the skilled person is able to derive other variations without departing from the scope of the invention.

## Claims

1. Method for fabricating a wind turbine blade shell, wherein the wind turbine blade shell is fabricated in a casting process using a mould (1) and a plurality of shell components (6), comprising the steps:
- Providing the mould and the plurality of shell components (6),
- Providing at least one alignment mark (3) at the mould and/or at one or more shell components (6) placed in the mould (1),
- Providing at least one marking means at the position of the at least one alignment mark (3),
- Arranging the or further shell components (6) in the mould and casting the wind turbine blade shell.

2. Method according to claim 1, **characterized in that** the at least one alignment mark (3) is provided using optical projection, especially laser projection.

3. Method according to claim 1 or 2, **characterized in that** a marking means providing a protrusion to the mould is placed on the at least one alignment mark (3) at the mould.

4. Method according to claim 3, **characterized in that** at least one tape and/or at least one plug (5), especially at least one rubber plug, is used as marking means.

5. Method according to one of the preceding claims, **characterized in that** at least one marking material different from the blade material or the blade materials of the at least one shell component (6) and/or different from a resin used for moulding of the wind turbine blade shell is used as marking means.

6. Method according to claim 5, **characterized in that** a marking material with a heating property and/or a heat absorption property different from the blade material or the blade materials of the at least one shell component and/or different from a resin used for moulding of the wind turbine blade is used.

7. Method according to claim 5 or 6, **characterized in that** metallic material and/or magnetic material and/or ceramic material, especially metallic and/or magnetic and/or ceramic particles or splinters, are used as marking material.

8. Method according to one of the preceding claims, **characterized in that** an electronically and/or optically detectable structure, especially a RFID chip, is used as marking means.

9. Method according to one of the preceding claims, **characterized in that** a marked shell component (7), especially a fibre patch marked with a symbol, is used as marking means.

10. Method according to one of the preceding claims, **characterized in that** the at least one alignment mark (3) is projected on a position determined for arrangement of a vortex generator and/or that at least one vortex generator is mounted on the casted wind turbine blade at a position marked by the at least one marking means.

11. Wind turbine blade comprising at least one wind turbine blade shell fabricated according to one of the preceding claims or at least one wind turbine blade shell comprising at least one mark (8), wherein the at least one mark (8) is an imprint and/or an indentation and/or an electronically and/or optically detectable structure, especially a RFID chip, and/or wherein the at least one mark is at least one marking material different from the shell material or the shell materials of the at least one shell component and/or different from a resin used for moulding of the wind turbine blade shell.

12. Wind turbine blade according to claim 11, **characterized in that** the at least one marking material is a material with a heating property and/or a heat absorption property different from the shell material or the shell materials of the at least one shell component and/or different from a resin used for moulding of the wind turbine blade shell.

13. Wind turbine blade according to claim 11 or 12, **characterized in that** the marking material is or comprises a metallic material and/or a magnetic material and/or a ceramic material, especially metallic and/or magnetic and/or ceramic particles or splinters.

14. Wind turbine comprising at least one wind turbine blade (10) according to one of the claims 11 to 13.

15. Method for repair of a wind turbine blade shell fabricated according to one of the claims 1 to 10, of a wind turbine blade (10) according to one of the claims 11 to 13, or of a wind turbine (9) according to claim 14, wherein a first surface portion (11) of the wind turbine blade shell comprises at least one mark (8), wherein on a second surface portion (12) of the wind turbine blade shell surrounding the first surface portion (11), a plurality of auxiliary marks (13) describing the position of the at least one mark (8) is provided prior to a repair of the first surface portion.
